# EUROPEAN PATENT SPECIFICATION

(11) **EP 0 535 748 B1**
(45) Date of publication and mention of the grant of the patent: **03.12.1997**
(21) Application number: 92202989.7
(22) Date of filing: 30.09.1992
(51) Int. Cl.: A01B 29/06, A01B 49/06

(54) **A soil cultivating machine**
Bodenbearbeitungsmaschine
Machine de traitement de sol

(30) Priority: 02.10.1991 NL 9101659
(43) Date of publication of application: 07.04.1993
(73) Proprietor: Texas Industries Inc., Willemstad, Curaçao (AN)
(72) Inventor: van der Lely, Cornelis, Zug (CH)
(74) Representative: Mulder, Herman

(56) References cited:
- EP-A- 0 445 582
- DE-A- 2 738 211
- DE-A- 3 723 616
- DE-A- 3 918 117
- DE-C- 64 760
- FR-A- 2 621 212
- GB-A- 2 127 262
- US-A- 2 418 937

## Description

The present invention relates to an agricultural machine, according to the preamble of claim 1, such as a soil cultivating machine or a seed drill or a combination thereof, having a soil-compressing roller, the seed drill including a plurality of seed delivery tubes.

Such a machine is known (see US-A-2418937). The present invention has for its object to provide a machine which co-operates in an ideal manner with a soil-working roller. To that end, the machine according to the invention is characterized by the features of claim 1. In this manner, the certainty that a seed grain is deposited in an advantageous manner in the soil is approached to a significant extent. Namely, when the seed is slightly pressed, it comes into a better contact with the soil, so that it can more easily absorb moisture required for germination. Special features of the invention are defined in the dependant claims. The construction has for its result that sown seed can be covered with earth, so that a dark environment advantageous for germination is created, whilst moreover air-induced dehydration of the earth under the seed is obviated. A further important factor for the development of the plant is a loose and well-aired soil. Therefore, the machine according to the invention is additionally provided, again in accordance with a special feature of the invention, between the collars, with projecting elements for loosening a neighbouring strip of soil. Such elements may be constituted by tines.

So as to provide an advantageous construction of the machine in accordance with the invention, it is, in accordance with a special feature, advantageous for the roller to be provided with tines and that between two rows of tines there is present, coupled to a seed tube, a discharge member for removing seed from a hopper, the feed-out aperture of the discharge member being disposed at a very small distance from the roller periphery. This provides a very compact construction , whereas the height from which the seed drops, and consequently the degree to which the seed rolls sidewards to beyond the boundaries of the collar, is kept to a minimum.

For a better understanding of the invention and to show how same may be carried into effect, it will now be described in greater detail with reference to three embodiments representing a soil cultivating machine, a seed drill or a combination thereof, which are shown in the accompanying drawings, in which:
Figure 1 is, showing it in a state in which it is coupled to the three-point lifting hitch of a tractor, the plan view of a first embodiment of a soil cultivating machine in accordance with the invention;
Figure 2 is side view taken in the direction of the arrow II in Figure 1;

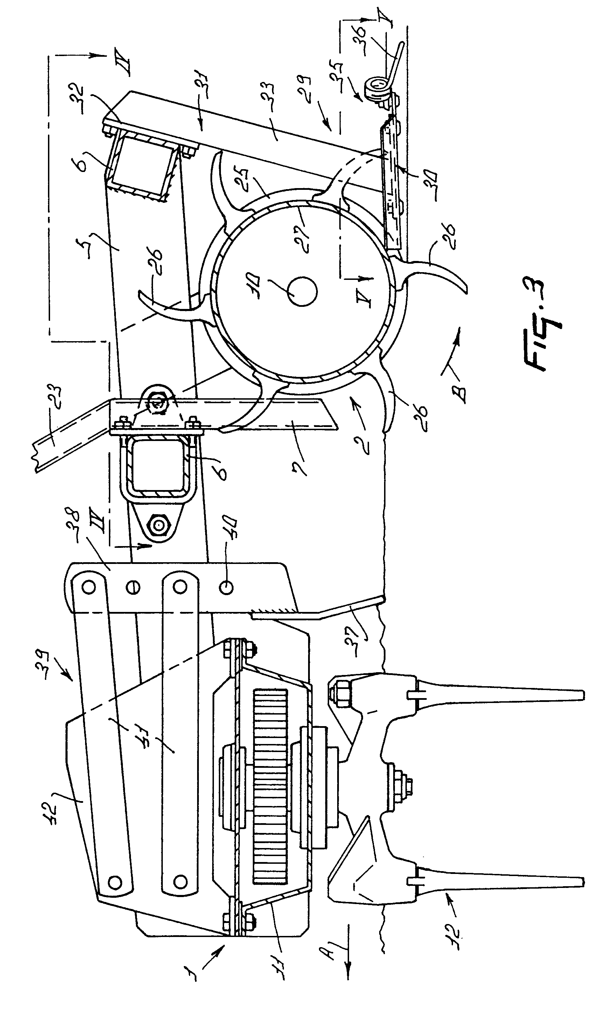

Figure 3 is an enlarged view of a portion of Figure 2;
Figure 4 is a plan view taken on the line IV-IV in Figure 3;
Figure 5 is a plan view taken on she line V-V in Figure 3, and shows a coverer element fitted to a scraper;
Figure 6 is a side view of an alternative implementation of a coverer element for the machine in accordance with the invention;
Figure 7 is a plan view of Figure 6;
Figure 8 is a side view of a second embodiment of the machine in accordance with the invention;
Figure 9 is a cross-sectional view in the direction of operative travel A of a portion of Figure 8;
Figure 10 is a side view of a third embodiment of the machine not in accordance with the invention, and
Figure 11 illustrates an effect of the soil cultivating machine on the soil and the seed deposited therein, if any.

Corresponding portions in the drawings have been given the same reference numeral. The embodiments shown and described serve as an illustration of the inventive idea.

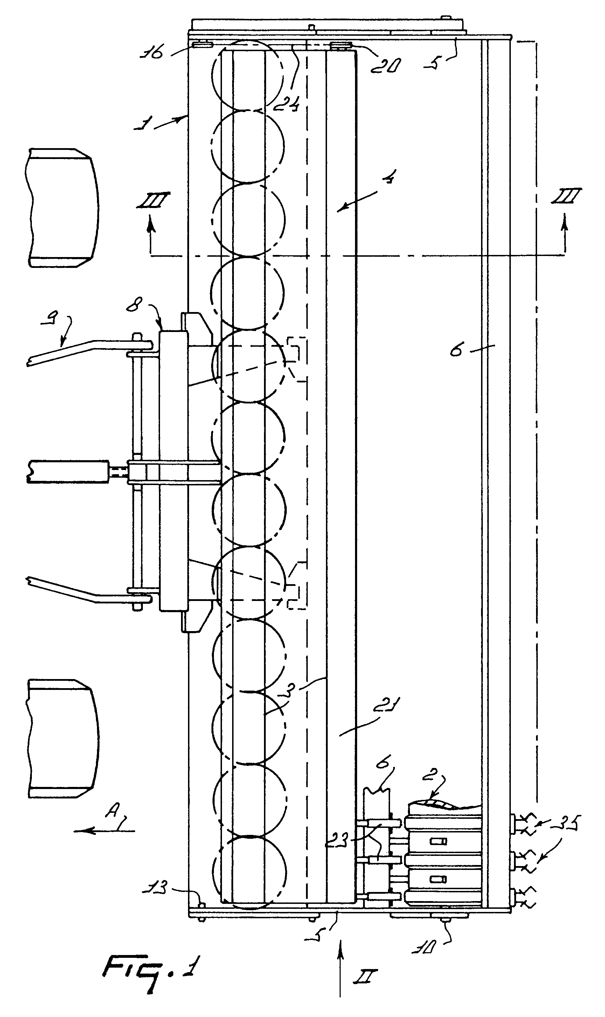

The first embodiment, shown in Figure 1, of the agricultural machine according to the invention is a combination of a p.t.o.-driven harrow 1, alternatively denoted rotary harrow, which is coupled to a soil-working roller 2 and a seed drill 4 represented by solid lines 3. Disposed between the arms 5 for the roller 2 is a carrier 6 carrying interspaced, coupled seed tubes 7.

The p.t.o.-driven harrow 1 is coupled via a trestle 8 to a three-point lifting hitch 9 of a tractor and is further formed by a box-like member 11, whose ends are closed and in which soil working members 12 which are drivable about upwardly directed shafts are bearing-supported. The arms 5 of the roller 2, which, taken in the direction of operative travel A, have their rear ends supportedly connected to the roller 2 about a shaft end 10, have their other end pivotally arranged about a shaft 13 at the leading end of the box-like member 11 of the soil cultivating machine 1.

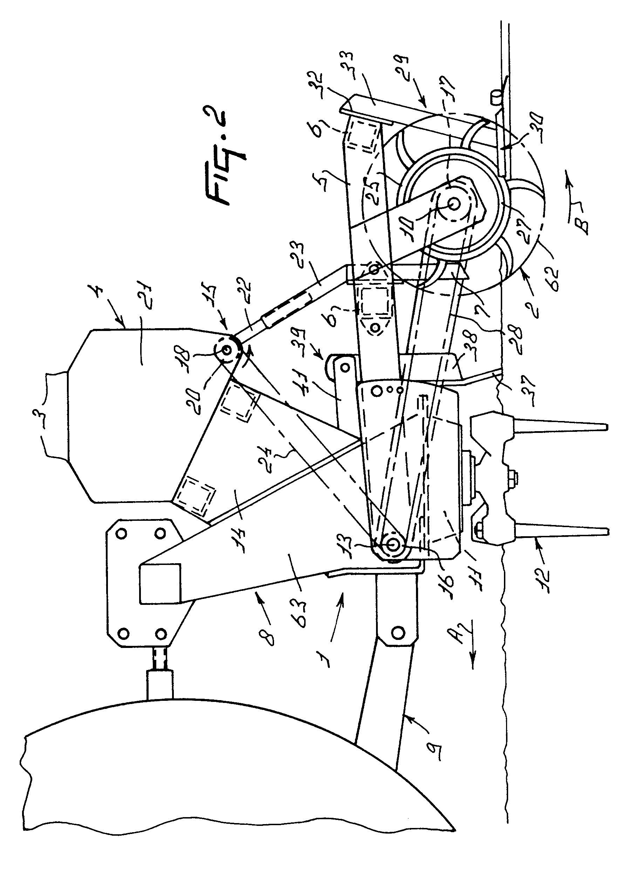

As is shown in Figure 2, the seed drill 4 is coupled via a supporting structure 14 to the trestle 8 and includes a discharge member 15 for calibrating seed, such as grain or peas. The discharge member 15 is driven by the roller 2 via a chain transmission system. This chain system comprises two gear wheels 16, which are supported on the pivot shaft 13, one of which is connected via a chain 28 to a gear wheel 17 on the shaft 10 for the roller 2 and the other one via a chain 24 to a chain wheel 20 on the drive shaft 18 for the seed calibration wheels 19 (see Figure 9) of the discharge members 15. The discharge members 15 are located, distributed over the working width of the machine, in the lowes part of a hopper 21 of the seed drill. In the first embodiment of the machine, the discharge member 15 ends in a first tube section 22, which is pivotally coupled to the drive shaft 18 of the discharge member 15, the other end of this tube section being surrounded with some clearance by a second tube section 23. The second tube section 23, which together with the tube section 22 constitutes a seed tube 7, is connected to the carrier 6. Because of the clearance between the said tube sections 22, 23, and the pivotability of the first tube section 22, the roller and the machine can move relative to each other without any complications.

Disposed between the roller 2 and the p.t.o.-driven harrow 1, and preceding the seed tubes 7, the machine is furthermore provided with a scraper beam 37 for smoothing the soil turned-over by the soil working members 12. In two spaced-apart points the scraper beam 37 is lifted by an upwardly directed support 38, which forms part of a parallelogram structure 39 and in which apertures 40 are provided for the height adjustment of the scraper beam 37. In addition, the parallellogram structure 39 includes two approximately horizontally arranged metal strips 41 which extend over the box-like member 11 and at the leading end of this member are connected thereto via an upwardly extending supporting plate 42. The roller 2 is in the shape of a tube provided with collars 25 transversely to the longitudinal direction. At the ends, the roller is covered by a round plate, against which a shaft 10 for connecting the roller to the arms is disposed. The collars 25 made in the surface of the roller 2 by a forming machine, have, in a radial cross-sectional view, a trapezoidal shape, the upper side of the trapezoid coinciding with the outer edge of the collar 25. The collars have a centre-to-centre distance of 100 to 125 mms and a height of approximately 15 mms.

Moreover, six tines 26 are provided on cylindrical tube portions between the collars 25. The tines 26 are folded rearwardly into the direction of rotation B of the roller and, measured along the length of the roller 2, have a width which exceeds the thickness. The width slightly decreases towards the free end of the tine and may assume values in the range from 2 to 4 cms. In the radial direction, the tines each project approximately 9 cms beyond the periphery of a cylindrical portion of the roller between the collars 25. Further advantageous dimensions of this radial distance are in the range of from 5 to 15 cms.

At that side that is the rear side, taken in the direction of operative travel A, the roller 2 is provided with a scraper implement 29 having scrapers 30 which are connected via supports 31 to a carrier 32 arranged between projecting portions of the arms 5 for the roller 2. In a cross-sectional view transversely to their longitudinal direction, the scrapers 30 have a U-shaped profile with upwardly extending, diverging legs. The scrapers 30 are disposed such that their leading sides are somewhat lower than their trailing sides and, by means of their leading ends, they each enclose one of the collars 25 on the roller, thus causing all three sides of a collar 25 to be scraped clean. In the present embodiment of the machine according to the invention, a coverer member 35 is mounted on the rear end of a scraper 30 for at least partly covering a furrow produced by a relevant collar 25 on the roller 2. In two further (non-shown) embodiments of the machine, the coverer member 35 is connected by means of holders to other portions of the scraper implement 29; or to a support 31 and to a carrier 32 for the scrapers, respectively.

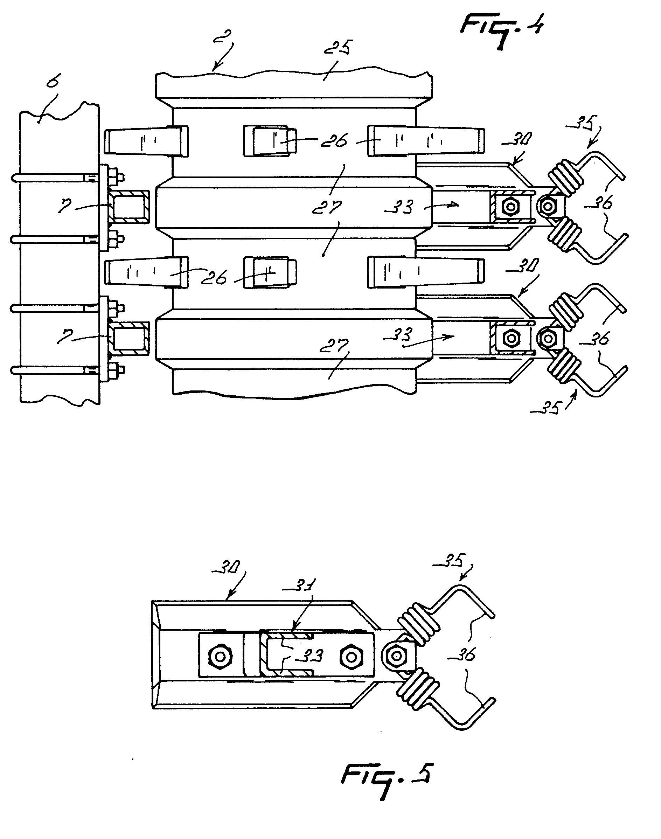

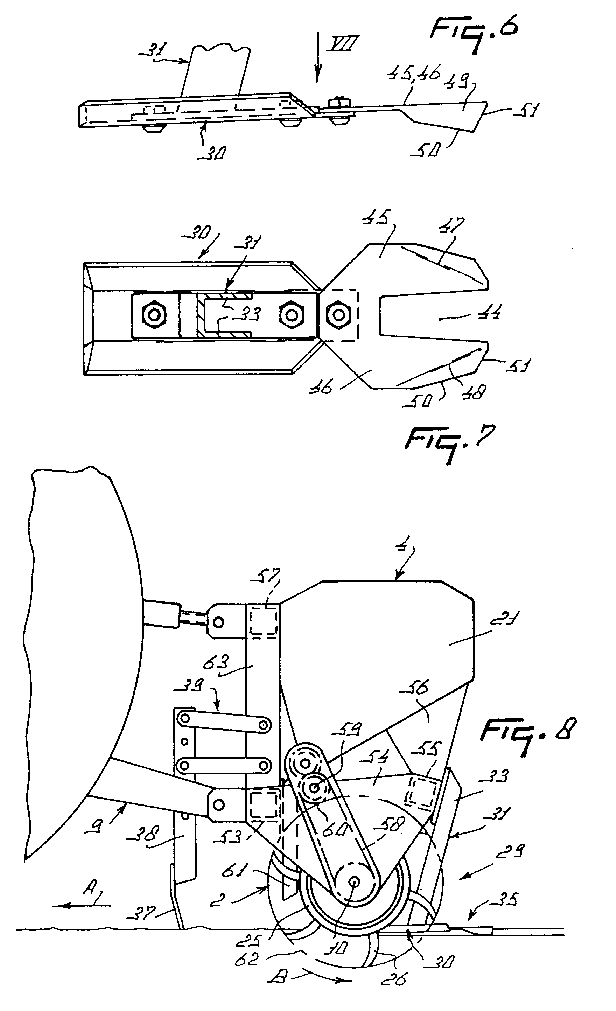

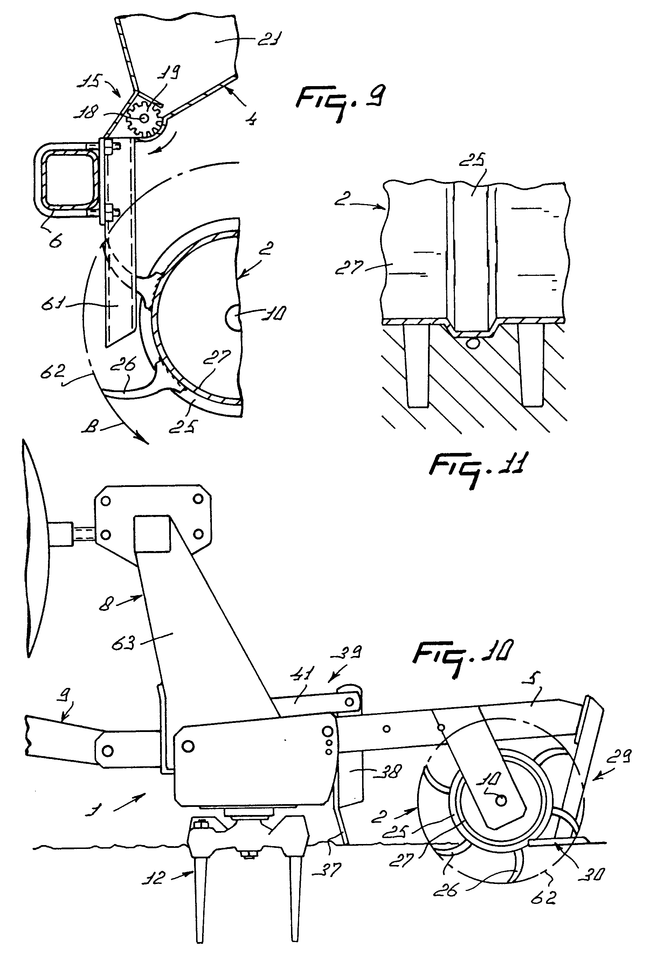

In a first embodiment, shown in Figures 4 and 5, a coverer member 35 is constituted by a spring-steel metal wire provided with turns, whose end sections 36 are rearwardly and downwardly directed towards each other. These end sections 36 are at least partly at a lower level than the non-profiled wall of the tube.

In a second embodiment, shown in Figures 6 and 7 the coverer member is formed by a plate. At the rear side, this plate is provided with a U-shaped notch 44 which in operation is located over a furrow made by a collar 25. At their rear sides, the coverer member portions 45, 46 separated by the notch are folded such that, in a plan view and taken in the direction of operative travel, the fold edges 47, 48 are divergent. In a side view, a folded-over portion 49 of the coverer member has a rearwardly extending lower edge 50, the height of the folded-over portion increasing, in a side view, to approximately 1 cm. The rear edge 51 extends obliquely rearwardly and towards the longitudinal centre point of the coverer member 35. In a side view, the rear edge 51 encloses an angle of more than 30° to a vertical line.

The two constructions of the coverer member have for their effect that the furrow formed by a collar 25 on the roller is slightly filled, or that the sown seed is covered with some loose earth.

In a second embodiment of the machine according to the invention, the roller 2 is combined with a seed drill, in such a manner that the seed drill 4 is supported by the roller 2. In this situation, the machine includes a frame with a three-point trestle connected to the foremost frame beam 53. This frame beam 53 is connected by means of its ends via supports 54 to a rear frame beam 55, which simultaneously constitutes the support of the scraper implement 29. The supports 54 are each constituted by a vertically arranged triangular plate, which extends in the direction of travel A. The respective points of connection to the frame beams 53, 55 are located in angular points of the plate. The roller 2 is connected, supported by bearings, in the third angular point, at a lower height than the frame beams 53, 55. The hopper 21 of the seed drill 4 is supported by the rear frame beam 55 via supports 56 and via a cross-beam 57 at the upper side of the three-point trestle 8. The discharge members 15 are driven by a chain 58, one end of which is passed around a chain wheel 17 on a shaft 10 of the roller and the other end around a chain wheel 60 on an intermediate shaft 59. Disposed on the intermediate shaft 59 is a (non-shown) second gear wheel, which for the purpose of reverting the direction of rotation is in connection with the gear wheel 20 on the drive shaft 18 for the discharge members 15. The discharge members 15 are positioned in the lower portion of the hopper 21 and near the periphery of the roller 2 above the first half thereof. Each discharge member 15, shown in further detail in Figure 9, ends in a seed tube 61 extending vertically between two rows of tines 26 and within the peripheral circle 62 thereof. As is also the case in the first embodiment, the seed tubes are each disposed, taken in the direction of operative travel, before a collar 25 on the roller 2, and a seed tube 61 ends near the surface of the soil.

Furthermore, this second embodiment of the machine, as also holds for the first embodiment, is provided at the leading end with a scraper beam for smoothing the seed bed. The relevant construction also comprises a parallelogram structure having arms 41, which this time have one end connected to the vertically extending supports 63 of the trestle 8.

In a third embodiment of the machine not according to the invention, the roller 2 described hereinbefore is combined with a soil cultivating machine, more specifically a p.t.o.-driven harrow. In this embodiment, the seed drill 4, the seed tubes 7, 61 and the coverer members 35 are omitted. The machine leaves a seed bed behind, which is ready for being sown. Such a seed bed has been profiled by the roller, so that it is relatively insensitive to erosion, which is more particularly important for sloping fields. The tines 26 ensure, by a locally soil turning action, that the seed bed is pressed, but remains light, whilst in wet conditions the notches produced in the seed bed contribute to a prompt disappearance of rain water etc. into the soil.

The action of the roller 2 in combination with a seed drill has for its object to deposit the seed just before a collar 25, the roller thereafter firmly pressing the seed into the soil. This manner of compacting provides a firm soil, which is advantageous for rooting of the seed. The firm contact of the seed with the surrounding earth has the advantage, in addition to an adequate anchoring of future roots, that the capillary action of the soil extends to as far as the seed, so that the supply of moisture for germination of the seed is promoted. After the seed has been pressed by the roller 2, it is covered with loose earth by the coverer members 35. This operation provides a dark environment for the seed, favourable for germination, and for protection against dehydration of the contiguous earth by air. Holes through which air can pass into the strips of soil between the rows of sown seed, which are of importance after the seed has rooted, are made by the tines 26 on the roller 2. Thus, the tines on the roller provide a seed bed which is not only advantageous for germination of the seed but also for the growth of the plants sprouting from the seed. In the embodiment of the machine, in which the roller 2 is not combined with a seed drill 4, the roller 2 serves for preparing the seed bed and/or for preventing wind erosion or water erosion on sloping fields.

In a (non-shown) embodiment of the agricultural machine not in accordance with the invention, the roller is connected by means of the arms 5 to a frame beam which comprises a trestle 8. This agricultural machine is used for a separate soil working operation, wherein, for example, erosion is obviated.

## Claims

1. An agricultural machine comprising a soil compressing roller (2) provided with a plurality of collars and a seed drill including a plurality of seed delivery tubes (7, 61) ending, as taken in the direction of operative travel, in front of the collars (25) of said roller (2), characterized in that the roller (2) is in the shape of a tube which is provided with the plurality of collars (25) for creating furrows in the soil to be rolled such, and the seed tubes (7, 61) ending such in front of the collars (25), that all the seed that is deposited by a seed tube (7, 61) is pressed into the soil by the respective collar (25), simultaneously with the creation of the respective furrow, and in that the machine is provided, at the rear side of the roller (2), with coverer members (35) for laterally displacing earth and at least partly covering the furrows produced by the relevant collars, the said coverer members being connected by means of holders to a support and carrier suitable for carrying scrapers.

2. An agricultural machine as claimed in claim 1, characterized in that the collars (25) comprise, as seen in radial cross-section, a trapezoidal shape, the upper side of the trapezoid coinciding with the outer edge of the collar.

3. An agricultural machine as claimed in claim 1 en 2, characterized, in that the roller (2) extends at least substantially through the working width of the machine (1) and is provided with scrapers (30) arranged near to the coverer members.

4. An agricultural machine as claimed in claim 3, characterized, in that the coverer members via a support (33) are attached to the carrier (6, 55) extending parallel to the roller (2), together with the scrapers (30).

5. An agricultural machine as claimed in claim 1 or 2, characterized in that the roller (2) with collars (25) for compacting soil strips is provided, between the collars, with projecting elements (26) for loosening a neighbouring strip of soil.

6. An agricultural machine as claimed in one or more of the preceding claims, characterized in that the projecting elements comprise tines (26) which are disposed and shaped such that the tine width in the longitudinal direction of the roller (2) exceeds the thickness of the tine (26).

7. An agricultural machine as claimed in any one of the preceding claims, characterized in that between two rows of tines (26) there is present, coupled to a seed tube (7), a discharge member (15) for removing seed from a hopper (4), the feed-out aperture of the discharge member being disposed close to the roller periphery.

8. An agricultural machine as claimed in one or more of the preceding claims, characterized in that, taken in the direction of rotation, the tines (26) are curvedly folded rearwardly.

9. An agricultural machine as claimed in any one of the preceding claims, characterized in that the seed tubes (7) end near the soil surface and in that a scraper beam (37) is disposed before the seed tubes (7).

10. An agricultural machine as claimed in one or more of the preceding claims 1 to 7, characterized in that the means for the lateral displacement (35) of earth are connected to the scraper implement (29).

## Patentansprüche

1. Landwirtschaftliche Maschine, die eine Bodenverdichtungswalze (2) mit mehreren Ringen und eine Drillmaschine mit mehreren Saatzuführrohren (7, 61) aufweist, welche in bezug auf die Arbeitsrichtung vor den Ringen (25) der Walze (2) enden,
dadurch gekennzeichnet, daß die Walze (2) die Form eines Rohres hat, an dem die Ringe (25) zum Ziehen von Furchen im Boden ausgebildet sind, wobei die Walze derart abzurollen ist und die Särohre (7, 61) derart vor den Ringen (25) enden, daß der jeweilige Ring (25) während des Ziehens der zugehörigen Furche gleichzeitig das gesamte aus einem Särohr (7, 61) ausströmende Saatgut in den Boden eindrückt, und daß die Maschine an der Rückseite der Walze (2) Zustreicher (35) aufweist, die die Erde seitwärts verlagern und die von den jeweiligen Ringen gezogenen Furchen zumindest teilweise bedecken, wobei die Zustreicher mittels Haltern mit einer Stütze und einem Träger für Abstreifer verbunden sind.

2. Landwirtschaftliche Maschine nach Anspruch 1,
dadurch gekennzeichnet, daß die Ringe (25) im Radialschnitt trapezförmig sind, wobei sich die obere Seite des Trapezes mit dem Außenrand des Ringes deckt.

3. Landwirtschaftliche Maschine nach den Ansprüchen 1 und 2,
dadurch gekennzeichnet, daß sich die Walze (2) zumindest im wesentlichen über die Arbeitsbreite der Maschine (1) erstreckt und mit Abstreifern (30) versehen ist, die nahe den Zustreichern angeordnet sind.

4. Landwirtschaftliche Maschine nach Anspruch 3,
dadurch gekennzeichnet, daß die Zustreicher zusammen mit den Abstreifern (30) über eine Stütze (33) an dem Träger (6, 55) angebracht sind, der sich parallel zu der Walze (2) erstreckt.

5. Landwirtschaftliche Maschine nach Anspruch 1 oder 2,
dadurch gekennzeichnet, daß die Walze (2) mit den Ringen (25) zum Verdichten von Bodenstreifen zwischen den Ringen mit vorspringenden Elementen (26) zur Lockerung eines angrenzenden Bodenstreifens versehen ist.

6. Landwirtschaftliche Maschine nach einem oder mehreren der vorhergehenden Ansprüche,
dadurch gekennzeichnet, daß die vorspringenden Elemente Zinken (26) sind, die derart angeordnet und ausgebildet sind, daß die Breite des Zinkens in Längsrichtung der Walze (2) größer ist als die Dicke des Zinkens (26).

7. Landwirtschaftliche Maschine nach einem der vorhergehenden Ansprüche,
dadurch gekennzeichnet, daß zwischen zwei Reihen von Zinken (26) ein mit einem Särohr (7) verbundenes Auslaßteil (15) zum Ausströmen von Saatgut aus einem Vorratsbehälter (4) angeordnet ist, wobei die Auslaßöffnung des Auslaßteiles nahe der Peripherie der Walze angeordnet ist.

8. Landwirtschaftliche Maschine nach einem oder mehreren der vorhergehenden Ansprüche,
dadurch gekennzeichnet, daß die Zinken (26) in bezug auf die Rotationsrichtung nach hinten gekrümmt sind.

9. Landwirtschaftliche Maschine nach einem der vorhergehenden Ansprüche,
dadurch gekennzeichnet, daß die Särohre (7) nahe der Oberfläche des Bodens enden, und daß vor den Särohren (7) ein Ebnungsbalken (37) angeordnet ist.

10. Landwirtschaftliche Maschine nach einem oder mehreren der vorhergehenden Ansprüche 1 bis 7,
dadurch gekennzeichnet, daß die Vorrichtung (35) zur Seitwärtsverlagerung von Erde mit der Abstreifvorrichtung (29) verbunden ist.

## Revendications

1. Machine agricole comprenant un rouleau (2) comprimant le sol, muni d'une pluralité de colliers, et un semoir comportant une pluralité de tubes (7, 61) débitant les semences, ces tubes débouchant, en étant vus dans le sens de marche du travail, en avant des colliers (25) dudit rouleau (2),
**caractérisée** en ce que le rouleau (2) a la forme d'un tube qui est muni de la pluralité de colliers (25) pour créer des sillons dans le sol destiné à être roulé, les tubes à semences (7, 61) se terminant en avant des colliers (25) de telle manière que toutes les semences qui sont déposées par un tube à semences (7, 61) soient pressées dans le sol par le collier (25) respectif, simultanément à la création du sillon respectif, et en ce que la machine est munie, au côté postérieur du rouleau (2), d'organes couvrants (35) pour déplacer la terre latéralement et pour recouvrir au moins partiellement les sillons produits par les colliers correspondants, lesdits organes couvrants étant reliés au moyen d'organes de fixation à un support et à un élément porteur appropriés pour porter des racleurs.

2. Machine agricole selon la revendication 1, caractérisée en ce que les colliers (25) ont, en étant vus en coupe radiale, une forme trapézoïdale, le côté supérieur du trapézoïde coïncidant avec le bord extérieur du collier.

3. Machine agricole selon la revendication 1 ou 2, caractérisée en ce que le rouleau (2) s'étend au moins pratiquement sur toute la largeur de travail de la machine (1) et est muni de racleurs (30) disposés près des organes couvrants.

4. Machine agricole selon la revendication 3, caractérisée en ce que les organes couvrants sont attachés par l'intermédiaire d'un support (33) à l'élément porteur (6, 55) s'étendant parallèlement au rouleau (2), ensemble avec les racleurs.

5. Machine agricole selon la revendication 1 ou 2, caractérisée en ce que le rouleau (2) est muni de colliers (25) pour compacter des bandes de terre et est muni, entre les colliers, d'éléments saillants pour ameublir une bande de terre voisine.

6. Machine agricole selon une ou plusieurs des revendications précédentes, caractérisée en ce que les éléments saillants comprennent des dents (26) qui sont disposées et conformées de telle manière que la largeur d'une dent dans le sens longitudinal du rouleau (2) excède l'épaisseur de la dent (26).

7. Machine agricole selon l'une quelconque des revendications précédentes, caractérisée en ce qu'entre deux rangées de dents (26) est présent un organe de décharge (15) couplé à un tube à semences (7) pour soutirer des semences d'une trémie (4), l'ouverture de sortie de l'organe de décharge étant disposée près de la périphérie du rouleau.

8. Machine agricole selon une ou plusieurs des revendications précédentes, caractérisée en ce qu'en étant vues dans le sens de rotation les dents (26) sont incurvées vers l'arrière.

9. Machine agricole selon l'une quelconque des revendications précédentes, caractérisée en ce que les tubes à semences (7) débouchent près de la surface du sol et en ce qu'une poutre racleuse (37) est disposée en avant des tubes à semences (7).

10. Machine agricole selon une ou plusieurs des revendications précédentes 1 à 7, caractérisée en ce que les organes couvrants (35) pour déplacer de la terre latéralement sont reliés au dispositif racleur (29).
